Europäisches Patentamt

European Patent Office

Office européen des brevets

(11) Veröffentlichungsnummer: **0 302 998 B1**

(12) **EUROPÄISCHE PATENTSCHRIFT**

(45) Veröffentlichungstag der Patentschrift: **01.07.92**

(51) Int. Cl.5: **B23B 29/32**

(21) Anmeldenummer: **88106128.7**

(22) Anmeldetag: **18.04.88**

(54) **Werkzeugrevolver für Werkzeugmaschinen.**

(30) Priorität: **08.08.87 DE 8710865 U**

(43) Veröffentlichungstag der Anmeldung:
**15.02.89 Patentblatt 89/07**

(45) Bekanntmachung des Hinweises auf die
Patenterteilung:
**01.07.92 Patentblatt 92/27**

(84) Benannte Vertragsstaaten:
**DE ES FR GB IT**

(56) Entgegenhaltungen:
EP-A- 0 214 090       DE-A- 3 202 042
DE-A- 3 630 966       DE-U- 8 710 865
FR-A- 2 309 297       FR-A- 2 539 830
GB-A- 2 126 134       US-A- 2 677 169

SOVIET INVENTIONS ILLUSTRATED Sektion
Mechanik, Woche 8607, Zusammenfassung
Nr. 047052. P56, 25. Februar 1986, Derwent
Publications Ltd LONDON, GB. & SU - A -
1168379 (KAPLUN S.D.)

(73) Patentinhaber: **Sauter Feinmechanik GmbH
Postfach 15 51
W-7430 Metzingen(DE)**

(72) Erfinder: **Thumm, Helmut
37 Steinerweg
W-7430 Metzingen(DE)**
Erfinder: **Kettel, Hans
12 Erlenweg
W-7434 Riederich(DE)**

(74) Vertreter: **Patentanwälte Phys. Bartels
Dipl.-Ing. Fink Dr.-Ing. Held
Lange Strasse 51
W-7000 Stuttgart 1(DE)**

## Beschreibung

Die Erfindung betrifft einen Werkzeugrevolver für Werkzeugmaschinen, insbesondere Drehmaschinen oder NC-Bearbeitungseinheiten, mit einem Revolverkopf, der eine Revolverachse definiert und eine Drehlagerung für eine um die Revolverachse drehbare Werkzeugscheibe bildet, die in Drehschritten weiterschaltbar ist und, einer Anzahl von Werkzeugstationen entsprechend, längs ihres Umfangsbereiches verteilt angeordnete Werkzeugaufnehmen aufweist, in denen jeweils mit einem Aufnahmeschaft versehene Werkzeughalter aufnehmbar sind, von denen die für Rotationswerkzeuge vorgesehenen je eine zum Aufnahmeschaft koaxiale, zur Revolverachse achsparallel drehbar gelagerte Antriebswelle aufweisen, die mittels einer Antriebseinrichtung antreibbar ist.

Ein Werkzeugrevolver mit mehreren Werkzeugaufnahmen ist aus der DE-PS 32 02 042 bekannt. Wenn sich in den Werkzeugaufnahmen der Werkzeugscheibe dieses bekannten Revolvers mehrere Werkzeughalter mit Rotationswerkzeugen befinden, dann sind bei dieser bekannten Lösung sämtliche Rotationswerkzeuge im Betrieb mit der Betriebsdrehzahl angetrieben und nicht nur dasjenige Rotationswerkzeug, das sich in der Station befindet, welche für den jeweiligen Bearbeitungsvorgang als Arbeitsstation wirksam ist. Das Leerlaufen der übrigen, nicht in der betreffenden Arbeitsstation befindlichen Rotationswerkzeuge bedeutet einen unnötigen Verschleiß der zugehörigen Lager- und Getriebeeinrichtungen sowie unnötige Verluste an Antriebsleistung. Insbesondere stellt das Mitlaufen von am Bearbeitungsvorgang nicht beteiligten, außerhalb der Arbeitsstation befindlichen Rotationswerkzeugen einen wesentlichen Sicherheitsmangel dar.

Aus der GB 2 126 134 A ist ein Werkzeugrevolver mit mehreren Werkzeugaufnahmen bekannt, bei dem die Antriebseinrichtung ein zur Revolverachse achsparalleles Schieberad aufweist, das längs seiner Drehachse axial zwischen einer gegen die Werkzeugscheibe vorgeschobenen Kupplungsstellung, in der das Schieberad mit einer Zwischenwelle gekuppelt ist, die über ein Zwischengetriebe mit der zur Zwischenwelle nicht koaxial angeordneten Antriebswelle eines anzutreibenden Aufnahmeschaftes in Getriebeverbindung steht, und einer zurückgezogenen Entkuppelstellung verschiebbar ist. Nicht nur die Achse des Schieberades, sondern auch diejenige eines das Schieberad in Drehung versetzenden Zahnrades sind achsparallel zur Revolverachse angeordnet. Eine Steuereinrichtung ermöglicht bei diesem bekannten Werkzeugrevolver ein wahlweises Verschieben des Schieberades zwischen Kupplungsstellung und Entkuppelstellung. Dadurch, daß bei dieser bekannten Lösung das Schieberad wahlweise mit einem jeweils anzutreibenden Aufnahmeschaft in Getriebeverbindung gebracht werden kann, ist ein unnötiges Leerlaufen nicht in der Arbeitsposition befindlicher Werkzeuge vermieden. Dieser bekannte Werkzeugrevolver weist jedoch den Nachteil einer sperrigen, komplizierten und nicht anpassungsfähigen Bauweise auf.

Der Erfindung liegt die Aufgabe zugrunde, einen Werkzeugrevolver der in Betracht stehenden Art zu schaffen, der sich demgegenüber durch eine einfache und kompakte Bauweise auszeichnet, die dennoch anpassungsfähig ist.

Erfindungsgemäß ist diese Aufgabe durch einen Werkzeugrevolver mit den Merkmalen des Anspruches 1 gelöst.

Dadurch, daß bei der Erfindung das Schieberad in der Kupplungsstellung endseits unmittelbar mit der Antriebswelle des anzutreibenden Aufnahmeschafts zusammenwirkt, ist keinerlei Zwischengetriebe zwischen Schieberad und Antriebswelle erforderlich, d. h. die Getriebeverbindung kommt durch den direkten Kupplungseingriff zwischen Schieberad und Antriebswelle zustande. Gegenüber dem in der GB-PS 2 126 134A gezeigten Werkzeugrevolver mit einem Zahnradgetriebe zwischen der Antriebswelle und einem Kupplungselement, das mit dem Schieberad kuppelbar ist, ergibt sich bei der Erfindung eine vereinfachte und besonders kompakte Bauweise. Durch die Verwendung eines Zahnringes als eingangsseitiges Antriebselement und die Anordnung des Zahnringes im Revolverkopf selbst, also durch die räumliche Trennung des Zahnringes von der Werkzeugscheibe, enthält diese kein im Betrieb dauernd angetriebenes Getriebeelement. Durch Vorschieben des mit dem Zahnring gekuppelten Schieberades mittels der Steuereinrichtung in die Kuppelstellung, in der das Schieberad mit der Antriebswelle desjenigen Werkzeughalters gekuppelt ist, der auf die Drehachse des Schieberads jeweils ausgerichtet ist, läßt sich wahlweise ein gewünschtes Rotationswerkzeug für einen betreffenden Bearbeitungsvorgang antreiben.

Vor allem ermöglicht aber der Zahnring wegen seiner Anordnung im Revolverkopf koaxial zur Revolverachse, die Position der mit dem Zahnring in Eingriff stehenden Antriebseinrichtung frei zu wählen. Die Antriebseinrichtung kann deshalb dort angeordnet sein, wo dies besonders zweckmäßig ist.

Die Steuereinrichtung kann so ausgebildet sein, daß das Schieberad in Abhängigkeit vom Vorgang des Weiterschaltens der Werkzeugscheibe um einen Drehschritt selbsttätig in die Entkuppelstellung zurückgezogen und am Ende eines Drehschritts selbsttätig wieder in die Kupplungsstellung vorgeschoben wird.

Nachstehend ist die Erfindung anhand von in der Zeichnung dargestellten Ausführungsbeispielen im einzelnen erläutert.

Es zeigen:

Fig. 1    eine schematisch vereinfacht gezeichnete Vorderansicht des Revolverkopfes eines Ausführungsbeispiels des Werkzeugrevolvers, wobei die zugehörige Werkzeugscheibe weggelassen ist;

Fig. 2    einen demgegenüber in größerem Maßstab gezeichneten Schnitt längs der Schnittlinie II-II von Fig. 1, wobei die Werkzeugscheibe mit strichpunktieren Linien in abgebrochener Darstellung angedeutet ist, und

Fig. 3 und 4    der Fig. 2 ähnliche, jedoch in noch größerem Maßstab dargestellte Schnitte eines zweiten bzw. eines dritten Ausführungsbeispiels des Werkzeugrevolvers.

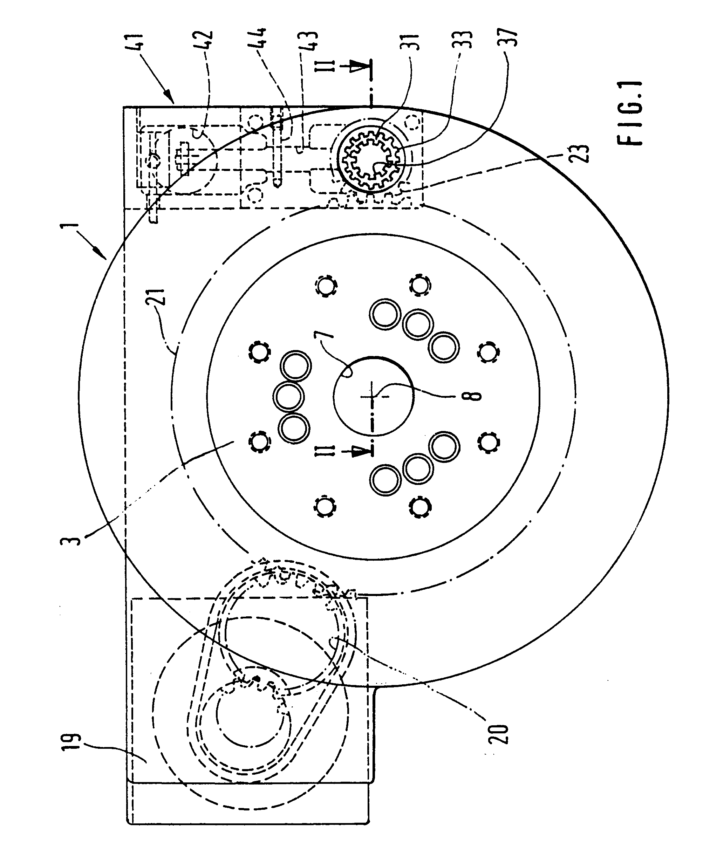

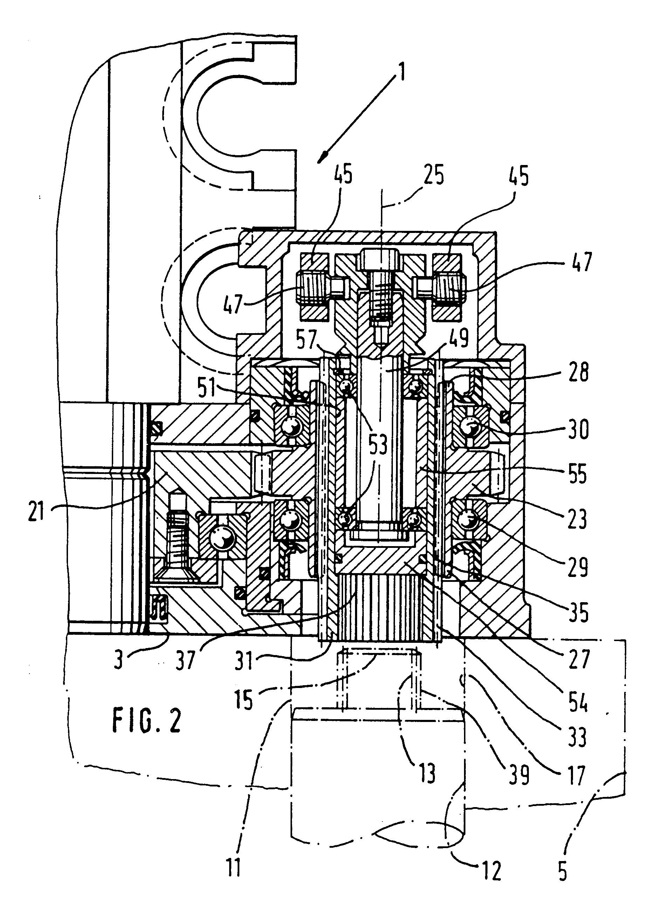

Von einem Werkzeugrevolver für die Verwendung bei einer Drehmaschine oder einer NC-Bearbeitungseinheit zeigt Fig. 1 in Vorderansicht einen Revolverkopf 1 in Form eines im großen und ganzen kreiszylindrischen Gehäuses, das beispielsweise auf einem Kreuzsupport einer betreffenden Drehmaschine oder einem Ständer oder Schlitten einer Bearbeitungseinheit anbringbar ist. Der Revolverkopf 1 weist eine kreisrunde vordere Planfläche 3 auf, an der eine in Fig. 1 nicht dargestellte Werkzeugscheibe, die lediglich in Fig. 2 angedeutet und mit 5 bezeichnet ist, in üblicher Weise drehbar anbringbar ist, wobei die Werkzeugscheibe 5 durch einen Zentrierzapfen 7 zentriert ist, der aus der Planfläche 3 etwas vorspringt und eine zentrale Revolverachse 8 definiert. Die Werkzeugscheibe 5 ist in bekannter Weise am Revolverkopf 1 in Drehschritten weiterschaltbar, deren Anzahl und Drehwinkel entsprechend der Anzahl und Lageanordnung von Werkzeugstationen der Werkzeugscheibe 5 gewählt sind.

Bei den Werkzeugstationen der Werkzeugscheibe 5 handelt es sich um Werkzeugaufnahme 11 (s. Fig. 2), in denen Werkzeughalter mit ihrem Aufnahmeschaft 12 so aufnehmbar sind, daß die Längsachse des betreffenden Aufnahmeschafts 12 achsparallel zur Revolverachse 8 verläuft. Der in Fig. 2 gezeigte Aufnahmeschaft 12 gehört zu einem Werkzeughalter, der mit einem Rotationswerkzeug bestückt ist. Dieses ist mittels einer im Aufnahmeschaft 12 koaxial drehbar gelagerten Antriebswelle 13 antreibbar, deren Endabschnitt 15 in dem der Planfläche 3 zugekehrten Endbereich 17 der Werkzeugaufnahme 11 frei zugänglich ist, so daß der Endabschnitt 15 der Antriebswelle 13 auf nachstehend zu beschreibende Weise mit einer Dreh- Antriebseinrichtung verbindbar ist.

Diese Antriebseinrichtung weist, wie aus Fig. 1 zu ersehen ist, einem am Revolverkopf 1 seitlich befestigten Getriebemotor 19 auf, dessen Abtriebsrad 20 (Fig. 1) mit der äußeren Stirnverzahnung eines Zahnringes 21 kämmt, der im Revolverkopf 1 in geringem Abstand von dessen vorderer Planfläche 3 um die Revolverachse 8 drehbar gelagert ist.

Ein mit dem Zahnring 21 kämmendes, von diesem angetriebenes Zahnritzel 23 ist bei dem gezeigten Ausführungsbeispiel im Revolverkopf 1 an einer dem Rad 20 in etwa diametral gegenüberliegenden Stelle drehbar und axial unverschiebbar so gelagert, daß seine Drehachse 25 achsparallel zur Revolverachse 8 verläuft und zur Revolverachse 8 den gleichen Radialabstand besitzt wie die Längsachsen der Werkzeugaufnahmen 11 der Werkzeugscheibe 5. Das Zahnritzel 23 besitzt beidseits neben seines Verzahnungsteils in Axialrichtung verlängerte Nabenteile 27 und 28, deren Außenmantelflächen mit Wälzlagern 29 und 30 zur Lagerung des Zahnritzels 23 zusammenwirken. Wegen des Vorhandenseins der langgestreckten Nabenteile 27 und 28 hat eine durchgehende koaxiale Nabenbohrung eine verhältnismäßig große axiale Länge, verglichen mit der axialen Erstreckung des Verzahnungsabschnittes des Zahnritzels 23.

Um die Drehbewegung des im Betrieb dauernd über den Zahnring 21 angetriebenen Zahnritzels 23 wahlweise auf den Endabschnitt 15 der Antriebswelle 13 eines Werkzeugs in einer auf die Drehachse 25 ausgerichteten Werkzeugaufnahme 11 zu übertragen, ist ein längs der Drehachse 25 wahlweise verschiebbares Schieberad vorhanden, das mit dem Zahnritzel 23 auf Drehung verbunden ist. Beim in Fig. 1 und 2 gezeigten Ausführungsbeispiel ist das Schieberad in Form einer kreiszylindrischen Hülse 31 ausgebildet, deren Außenseite mit einer geraden Keilverzahnung 33 versehen ist. Die Hülse 31 ist in der Nabenbohrung des Zahnritzels 23 axial verschiebbar gelagert, wobei die äußere Keilverzahnung 33 in die Hülse 31 in Keilnuten 35 der Nabenbohrung des Zahnritzels 23 geführt ist, so daß Hülse 31 und Zahnritzel 23 formschlüssig auf Drehung verbunden sind.

In ihrem der Planfläche 3 zugekehrten vorderen Endabschnitt weist die Hülse 31 an ihrer Innenwandung Keilnuten 37 auf. Durch Vorschieben der Hülse 31 längs der Drehachse 25 in Richtung auf die Werkzeugscheibe 5 hin kommt eine äußere Keilverzahnung 39 am Endabschnitt 15 der Antriebswelle 13 eines in der Werkzeugaufnahme 11 angeordneten Rotationswerkzeugs in Kupplungseingriff mit den Keilnuten 37 in der Hülse 31. Für das wahlweise Verschieben der Hülse 31 zwischen deren in Fig. 2 gezeigter zurückgezogener Entkuppelstellung und der vorgeschobenen Kupplungsstellung, in der die Keilnuten 37 der Hülse 31 mit der Keilverzahnung 39 am Endabschnitt 15 der Antriebswelle 13 in Eingriff sind, ist eine Steuereinrichtung vorgesehen.

Diese Steuereinrichtung weist bei dem Ausführungsbeispiel gemäß Fig. 1 und 2 einen in Fig. 1 als Ganzes mit 41 bezeichneten Stellantrieb auf, der, dem Getriebemotor 19 in etwa gegenüberliegend, an der Außenseite des Revolverkopfs 1 angeordnet ist. Der Stellantrieb 41 weist einen hydraulisch betätigbaren Arbeitszylinder 42 auf, mittels dessen ein Schalthebel 43 um einen Schwenkzapfen 44 schwenkbar ist. Der Schalthebel 43, von dem in Fig. 2 lediglich das gegabelte Ende 45 zu sehen ist, das als Schaltgabel dient, wirkt mit seitlichen Zapfen 47 eines in die Bohrung der Hülse 31 ragenden Steuerdornes 49 zusammen. Der Steuerdorn 49 erstreckt sich zur Drehachse 25 koaxial, ist jedoch wegen des Eingriffs zwischen seinen seitlichen Zapfen 47 und den als Schaltgabel dienenden Enden 45 des Schalthebels 43 nicht um die Achse 25 drehbar. Die Hülse 31 besitzt im Anschluß an den die Keilnuten 37 aufweisenden Bohrungsabschnitt einen erweiterten Bohrungsabschnitt 51, in dem zwei auf dem Steuerdorn 49 sitzende Wälzlager 53 angeordnet sind. Zwischen dem den Keilnuten 37 benachbarten vorderen Wälzlager 53 und der Innenschulter am Ende eines erweiterten Bohrungsabschnittes 51 sitzt ein topfförmiger Mitnehmerkörper 54, der in Zusammenwirkung mit dem Außenring des zugeordneten Wälzlagers 53 und der Innenschulter der Hülse 31 diese bei einer Axialverschiebung des Steuerdorns 49 in Richtung auf die Werkzeugscheibe 5 hin mitzunehmen und in die Kupplungsstellung zu verschieben vermag.

Zwischen den beiden Wälzlagern 53 ist eine Distanzierhülse 55 eingefügt. Der Außenring des den seitlichen Zapfen 47 benachbarten Wälzlagers 53 ist durch einen Sicherungsring 57 in Axialrichtung festgelegt. Auf diese Weise wird eine Verschiebebewegung des Steuerdorns 49 in Fig. 2 nach rechts auf die Hülse 31 übertragen, um diese in die in Fig. 2 gezeigte Endkuppelstellung zu bewegen. Es versteht sich, daß der den Schalthebel 43 bewegende Stellantrieb 41 der Steuereinrichtung anstelle eines hydraulischen Arbeitszylinders 42 einen anderen Kraftantrieb aufweisen könnte, beispielsweise einen Steuermagneten oder einen pneumatischen Antrieb.

Wie weiter oben beschrieben wurde, ist beim hier erläuterten Ausführungsbeispiel der Getriebemotor 19 mit dem den Zahnring 21 antreibenden Rad 20 auf der einen Seite neben dem Revolverkopf 1 angeordnet und das vom Zahnring 21 getriebe Zahnritzel 23 befindet sich in dem zum Rad 20 in etwa diametral gegenüberliegenden Seitenbereich des Revolverkopfes 1. Eine solche Lagebeziehung ist jedoch nicht zwingend. Ein Vorteil der Erfindung besteht darin, daß die Positionen des Antriebsmotors (Getriebemotor 19) und des angetriebenen Zahnritzels 23, dessen Achse 25 die Arbeitsposition des anzutreibenden Rotationswerkzeuges bestimmt, frei wählbar sind. So könnte beispielsweise, wenn dies für einen betreffenden Anwendungsfall beispielsweise aus Platzgründen oder aus durch die Bauart der zugeordneten Maschine bedingten Gesichtspunkten zweckmäßig ist, der Motor and der Oberseite des Revolverkopfes 1 und das die Arbeitsposition definierende Zahnritzel 23 an der Unterseite des Revolverkopfes 1 angeordnet sein. Es ist auch möglich, mehr als eine Arbeitsposition vorzusehen, indem beispielsweise der Motor an der Ober- oder Unterseite des Revolverkopfes 1 angeordnet wird und zu beiden Seiten des Motors je ein Zahnritzel 23 mit zugeordneten Schalt- und Steuereinrichtungen vorgesehen wird.

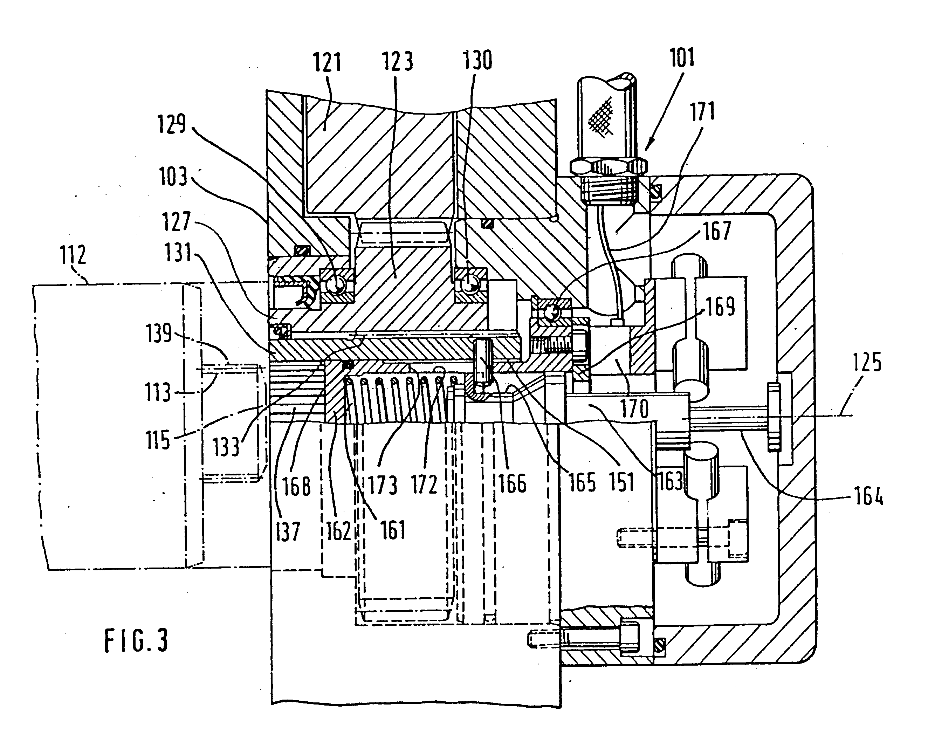

In Fig. 3, die Erläuterung eines zweiten Ausführungsbeispiels eines Werkzeugsrevolvers dient, sind Teile, die solchen des erstbeschriebenen Ausführungsbeispiels entsprechen, mit demgegenüber um 100 vergrößerten Bezugszahlen bezeichnet. Dieses zweite Auführungsbeispiel unterscheidet sich vom erstbeschriebenen Ausführungsbeispiel in der Hauptsache durch einen andersartigen Aufbau der Steuereinrichtung für die axialen Verschiebebewegungen der Hülse 131 längs der Drehachse 125. Bei dem Ausführungsbeispiel gemäß Fig. 3 ist die Hülse 131 normalerweise durch eine Ausrückfeder 161 in die in Fig. 3 gezeigte Entkuppelstellung vorgespannt. Die Ausrückfeder 161 stützt sich einerseits am inneren Ende einer Steuertrommel 162 ab und drückt mit ihrem anderen Ende auf ein Gleitstück 163, das auf einer zur Drehachse 125 konzentrischen Welle 164 verschiebbar ist. Das Gleitstück 163 weist eine Umfangsnut 165 auf, in die ein in der Wandung der Hülse 131 sitzender Steuerstift 166 eingreift, wobei eine Begrenzungsschulter der Umfangsnut 165 durch die Kraft der Ausrückfeder 161 in Anlage mit dem Steuerstift 166 gehalten ist. Die Kraft der Ausrückfeder 161 wirkt also über das Gleitstück 163 auf den Steuerstift 166 und sucht diesen nach rechts (Blickrichtung gemäß Fig. 3) zu verschieben.

Die Steuertrommel 162 ist mittels eines auch Axialkräfte aufnehmenden Wälzlagers 167 um die Drehachse 125 drehbar gelagert, jedoch axial unverschiebbar. Die Hülse 131 ist mit der Steuertrommel 162 über den Steuerstift 166 auf Drehung verbunden, der in eine Ausnehmung 172 in der Wandung der Steuertrommel 162 eingreift. Die Hülse 131 ihrerseits ist über ihre äußere Keilverzahnung 133 mit dem Zahnritzel 123 auf Drehung verbunden. Ein Dichtungsring 168, der zwischen dem erweiterten inneren Bohrungsabschnitt 151 der Hülse 131 und dem darin befindlichen Umfangsabschnitt der Steuertrommel 162 angeordnet ist, bildet außerdem einen Reibschluß, der zwischen der Steuertrommel 162 und der Hülse 131 ein mitdrehendes Drehmoment erzeugt.

An ihrem hinteren, dem Wälzlager 167 benachbarten Ende 169, wirkt die Steuertrommel 162 mit einer Magnetbremse 170 zusammen, die über ein Erregerkabel 171 wahlweise aktivierbar ist. Bei Aktivierung vermag die Magnetbremse 170 ein Bremsmoment zu erzeugen, das die Mitnahmewirkung des Reibschlusses zwischen der Hülse 131 und der Steuertrommel 162 übersteigt.

Die Wirkungsweise des Ausführungsbeispiels gemäß Fig. 3 ist folgende: Wie gesagt, wirkt die Kraft der Ausrückfeder 161 über das Gleitstück 163 auf den Steuerstift 166 ein. Da dieser in der Wandung der Bohrung der Hülse 131 sitzt, ist die Hülse 131 normalerweise durch die Kraft der Ausrückfeder 161 in der dargestellten Entkuppelstellung. Die Ausnehmung 172 in der Wandung der Steuertrommel 162 hat, was in Fig. 3 nicht erkennbar ist, eine zur Drehachse 125 schräge Erstreckung, genauer gesagt, die Form eines spiral- oder schraubenförmig verlaufenden Schlitzes. Bei nicht aktivierter Magnetbremse 170, wenn die Steuertrommel 162 mit der Hülse 131 frei mitdreht, liegt der Steuerstift 166 unter der Einwirkung der Ausrückfeder 161 an dem in Fig. 3 rechts gelegenen Ende der Ausnehmung 172 an. Wird nun die Magnetbremse 170 aktiviert, so sucht die Steuertrommel 162 gegenüber der Drehbewegung der Hülse 131 zurück zu bleiben, was bewirkt, daß der Steuerstift 166 in der als Spiralschlitz oder Schraubenschlitz gestalteten Ausnehmung 172 zu deren in der Zeichnung links gelegenem Ende 173 wandert. Bei dieser Bewegung des Steuerstifts 166 ergibt sich eine entsprechende axiale Verschiebebewegung der Hülse 131 in die vorgeschobene Kupplungsstellung. Wird die Magnetbremse 170 wieder inaktiviert, dann wandert der Steuerstift 166 in der Ausnehmung 172 unter der Einwirkung der Feder 161 wieder in die in Fig. 3 gezeigte Endstellung, wobei die Hülse 131 in die Entkuppelstellung bewegt wird.

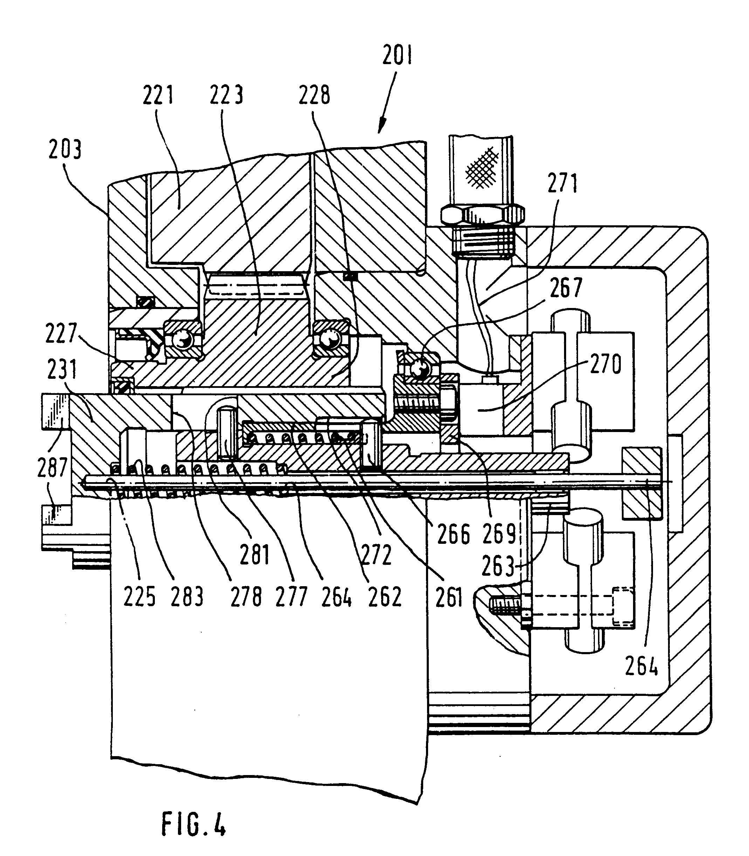

Teile des in Fig. 4 dargestellten dritten Ausführungsbeispiels, die solchen des ersten Ausführungsbeispiels oder des zweiten Ausführungsbeispiels entsprechen sind mit demgegenüber um 200 bzw. um 100 vergrößerten Bezugszahlen bezeichnet. Auch bei diesem Ausführungsbeispiel ist eine mittels eines Wälzlagers 267 bezüglich der Drahachse 225 drehbar und axial unverschiebbar gelagerte Steuertrommel 262 vorhanden, deren inneres Ende 269 mit einer Magnetbremse 270 zusammenwirkt. Die Steuertrommel 262 besitzt ebenfalls eine Ausnehmung 272 in Form eines Spiral- oder Schraubenschlitzes. Die Ausnehmung 272 ist von einem Steuerstift 266 durchgriffen, der durch die Kraft einer Ausrückfeder 261 normalerweise in dem in Fig. 4 rechts gelegenen Endteil der Ausnehmung 272 gehalten ist. Im Unterschied zum Ausführungsbeispiel gemäß Fig. 3 ist der Steuerstift 266 jedoch nicht in der Wandung der Hülse 231 gelagert, sondern an dem auf der Welle 264 verschiebbar gelagerten Gleitstück 263. Die Axialstellung des Gleitstücks 263 hängt also von der Position des Steuerstiftes 266 in der Ausnehmung 272 ab.

Die Aktivierung der Magnetbremse 270 bewirkt ein Zurückbleiben der Drehbewegung der Steuertrommel 262 gegenüber der Hülse 231 und dem Gleitstück 263, das mit der Hülse 231 mittels eines Mitnehmerstifts 277 auf Drehung verbunden ist, der in einen geraden, achsparallel verlaufenden Mitnehmerschlitz 278 der Hülse 231 eingreift. Bei der in Fig. 4 gezeigten Entkuppelstellung, bei der der Steuerstift 266 an dem in der Zeichnung rechts gelegenen Ende der Ausnehmung 272 anliegt, befindet sich der Mitnehmerstift 277 am in der Zeichnung rechts liegenden inneren Ende 281 des Mitnehmerschlitzes 278 und blockiert dadurch eine Verschiebebewegung der Hülse 231 nach links in die vorgeschobene Kupplungsstellung, obwohl die Hülse 231 durch eine Einrückfeder 283 für diese Bewegung in die Kupplungsstellung vorgespannt ist. Die Einrückfeder 283 sitzt auf der Welle 264 und stützt sich einerseits am Gleitstück 263 und andererseits am vorderen geschlossenen Ende der Innenbohrung der Hülse 231 ab. Wird die Magnetbremse 270 aktiviert, so wandert der Steuerstift 266 innerhalb der Ausnehmung 272, wobei das Gleitstück 263 gegen die Kraft der Ausrückfeder 261 in der Zeichnung nach links verschoben wird. Durch die entsprechende Bewegung des Mitnehmerstifts 277 nach links ist die Hülse 231 freigegeben, so daß sie sich unter der Einwirkung der Einrückfeder 283 ebenfalls nach links in die Kupplungsstellung bewegen kann, wobei äußere Mitnehmerlappen 287 der Hülse 231 mit zugeordneten Mitnehmergliedern an der Antriebswelle eines entsprechenden Rotationswerkzeuges in Kupplungseingriff kommen. Bei dem Ausführungsbeispiel gemäß Fig. 4 handelt es sich also um das Prinzip einer mittels der Einrückfeder 283 angefederten Kupplung für Werkzeugantriebe gemäß den VDMA-Richtlinien.

**Patentansprüche**

1. Werkzeugrevolver für Werkzeugmaschinen, insbesondere Drehmaschinen oder NC-Bearbeitungseinheiten, mit einem Revolverkopf (1; 101; 201), der eine Revolverachse (8) definiert und eine Drehlagerung für eine um die Revolverachse (8) drehbare Werkzeugscheibe (5) bildet, die in Drehschritten weiterschaltbar ist und, einer Anzahl von Werkzeugstationen entsprechend, längs ihres Umfangsbereiches verteilt angeordnete Werkzeugaufnahmen (11) aufweist, in denen jeweils mit einem Aufnahmeschaft (12; 112) versehene Werkzeughalter aufnehmbar sind, von denen die für Rotationswerkzeuge vorgesehenen je eine zum Aufnahmeschaft (12; 112) koaxiale, zur Revolverachse (8) achsparallel drehbar gelagerte Antriebswelle (13; 113) aufweisen, die mittels einer Antriebseinrichtung antreibbar ist, die ein zur Revolverachse (8) achsparalleles Schieberad (31; 131; 231) aufweist, das längs seiner Drehachse (25; 125; 225) axial zwischen einer gegen die Werkzeugscheibe (5) vorgeschobenen Kupplungsstellung, in der das Schieberad (31; 131; 231) und die Antriebswelle (13; 113) eines anzutreibenden Aufnahmeschafts (12; 112) miteinander in Getriebeverbindung sind, und einer zurückgezogenen Entkuppelstellung verschiebbar ist, und mit einer Steuereinrichtung (41) zum wahlweisen Verschieben des Schieberades (31; 131; 231) zwischen Kupplungs- und Entkuppelstellung, dadurch gekennzeichnet, daß die Antriebseinrichtung einen im Revolverkopf (1; 101; 201) koaxial zur Revolverachse (8) drehbar gelagerten Zahnring (21; 121; 221) aufweist, der über seine äußere Stirnverzahnung mit dem Schieberad (31; 131; 231) in Antriebsverbindung ist, und daß die Lage von dessen Drehachse (25; 125; 225) so gewählt ist, daß das Schieberad (31; 131; 231) und die Antriebswelle (13; 113) des anzutreibenden Aufnahmeschaftes (12; 112) zueinander koaxial und in der vorgeschobenen Kupplungsstellung je endseitig miteinander in Kupplungseingriff sind.

2. Werkzeugrevolver mach Anspruch 1, dadurch gekennzeichnet, daß das Schieberad in der Nebenbohrung eines mit der Stirnverzahnung des Zahnringes (21; 121; 221) kämmenden, drehbar und axial unverschiebbar gelagerten Zahnritzels (23; 123; 223) axial verschiebbar gelagert ist und eine äußere Keilverzahnung (33; 133; 233) aufweist, die in Keilnuten (35) der Nabenbohrung des Zahnritzels (23, 123; 223) eingreift, so daß dieses und das Schieberad miteinander auf Drehung verbunden sind.

3. Werkzeugrevolver nach Anspruch 2, dadurch gekennzeichnet, daß das Schieberad die Form einer langgestreckten, kreiszylindrischen Hülse (31; 131; 231) hat, deren Außenseite auf zumindest einem Teillängenabschnitt die Keilverzahnung (33; 133; 233) trägt und deren Bohrung zumindest eine Gestaltsunregelmäßigkeit aufweist, die für die Zusammenwirkung mit der Steuereinrichtung vorgesehen ist.

4. Werkzeugrevolver nach Anspruch 3, dadurch gekennzeichnet, daß als Gestaltsunregelmäßigkeit in der Bohrung der Hülse (31) mindestens ein erweiterter Bohrungsabschnitt (51) vorhanden ist, der Anschlagschultern für den Eingriff eines in die Bohrung ragenden, längs der Drehachse (25) verschiebbaren Steuerdorns (49) bildet, der mittels einer Schaltgabel (43, 45) wahlweise zwischen Axialstellungen verschiebbar ist, die der vorgeschobenen Kupplungsstellung und der zurückgezogenen Entkuppelstellung der Hülse (31) entsprechen.

5. Werkzeugrevolver nach Anspruch 3, dadurch gekennzeichnet, daß als Gestaltsunregelmäßigkeit ein in der Wand der Hülse (131; 231) sitzender, sich in deren Bohrung radial nach einwärts erstreckender Steuerstift (166; 266) vorgesehen ist, der in einen mit einer Komponente in Axialrichtung schräg verlaufenden Schlitz (172; 272) eingreift, der in der Wandung einer Steuertrommel (162; 262) ausgebildet ist, die in die Bohrung der Hülse (131; 231) ragt, um die Drehachse (125; 225) drehbar und axial unverschiebbar gelagert ist, und daß ein zur Steuereinrichtung gehörender, auf die Steuertrommel (162, 262) einwirkender Bremsmagnet (170; 270) vorgesehen ist, der wahlweise zum Erzeugen einer Bremswirkung erregbar ist, die die Mitnahmewirkung eines gegebenenfalls zwischen Steuertrommel (162; 262) und Hülse (131; 231) herrschenden Reibschlusses übersteigt.

6. Werkzeugrevolver nach Anspruch 3, dadurch gekennzeichnet, daß die Hülse (231) durch eine Einrückfeder (283) für eine Axialverschiebung in die vorgeschobene Kupplungsstellung vorgespannt ist, daß eine der Einrückfeder (283) entgegenwirkende Ausrückfeder (261) vorgesehen ist, die die Hülse (231) normalerweise in der zurückgezogenen Entkuppelstellung hält, und daß ein auf die Ausrückfeder (261) einwirkender Steuerkörper vorhanden ist, der durch die Steuereinrichtung wahlweise betätigbar ist, um die Ausrückfeder unwirksam zu machen, so daß die Hülse durch die Einrückfeder in die vorgeschobene Kuppelstellung verschiebbar ist.

7. Werkzeugrevolver nach Anspruch 6, dadurch gekennzeichnet, daß als Steuerkörper ein sich in der Bohrung der Hülse (231) radial erstreckender, mit der Hülse (231) auf Drehung verbundener Steuerstift (266) vorgesehen ist, der in einen mit einer Komponente in Axialrichtung schräg verlaufenden Schlitz (272) eingreift, der in der Wandung einer Steuertrommel (262) ausgebildet ist, die in die Bohrung der Hülse (231) ragt, um die Drehachse (225) drehbar und axial unverschiebbar gelagert und bei der Drehbewegung der Hülse (231) mit dieser mitdrehbar ist, und daß ein zur Steuereinrichtung gehörender, auf die Steuertrommel (262) einwirkender Bremsmagnet (270) vorgesehen ist, der wahlweise zum Erzeugen einer Bremswirkung erregbar ist, die die Mitnahmewirkung eines gegebenenfalls zwischen Steuertrommel (262) und Hülse (231) herrschenden Reibschlusses übersteigt.

8. Werkzeugrevolver nach einem dar Ansprüche 1 bis 7, gekennzeichnet durch wenigstens ein zusätzliches, mit dem Zahnring (21; 121; 221) in Antriebsverbindung stehendes Schieberad, das zur Bildung einer zusätzlichen Arbeitsposition für ein anzutreibendes Rotationswerkzeug in einer gegenüber dem ersten Schieberad versetzten Position im Revolverkopf (1) gelagert ist, deren Lage so gewählt ist, daß der Aufnahmeschaft (12; 112) in einer gewünschten Werkzeugaufnahme (11) durch einen Drehschritt dar Werkzeugscheibe (5) auf die Drehachse das zusätzlichen Schieberades ausrichtbar ist.

## Claims

1. Tool turret for machine tools, in particular lathes or NC-machining units, with a turret head (1; 101; 201), which defines a turret axis (8) and forms a rotary bearing for a tool disc (5) able to rotate about the turret axis (8), which tool disc (5) can be indexed to the next position in rotary steps and, corresponding to a number of tool stations, comprises tool receptacles (11) distributed along its peripheral region, in which tool receptacles tool holders provided with a receiving shaft (12; 112) can be received, whereof those provided for rotary tools each comprise a drive shaft (13; 113) coaxial with the receiving shaft (12; 112) and mounted to rotate axis parallel to the turret axis (8), which drive shaft can be driven by means of a drive device, which comprises a sliding gear (31; 131; 231) axis parallel with the turret axis (8), which sliding gear is able to slide along its axis of rotation (25; 125; 225) axially between an engaged position advanced towards the tool disc (5), in which the sliding gear (31; 131; 231) and the drive shaft (13; 113) of a receiving shaft (12; 112) to be driven are in geared connection one with the other and a retracted disengaged position, and with a control device (41) for the optional sliding of the sliding gear (31; 131; 231) between the engaged and disengaged position, characterised in that the drive device comprises a toothed ring (21; 121; 221) mounted to rotate in the turret head (1; 101; 201) coaxially with respect to the turret axis (8), which toothed ring is in driving connection by way of its outer end toothing with the sliding gear (31; 131; 231) and that the position of its axis of rotation (25; 125; 225) is chosen so that the sliding gear (31; 131; 231) and the drive shaft (13; 113) of the receiving shaft (12; 112) to be driven are in engagement one with the other coaxially with respect to each other and on their end faces in the advanced engaged position.

2. Tool turret according to Claim 1, characterised in that the sliding gear is mounted to slide axially in the hub bore of a pinion (23; 123; 223) mounted to rotate and to be fixed in the axial direction and meshing with the end toothing of the toothed ring (21; 121; 221) and comprises outer splines (33; 133; 233), which engage in wedge-shaped grooves (35) of the hub bore of the pinion (23, 123; 223), so that the latter and the sliding gear are connected to each other for rotation.

3. Tool turret according to Claim 2, characterised in that the sliding gear is in the form of an elongated, circular cylindrical sleeve (31; 131; 231), whereof the outer side supports the splines (33; 133; 233) on at least a partial longitudinal section and whereof the bore has at least one irregularity of shape, which is provided for cooperation with the control device.

4. Tool turret according to Claim 3, characterised in that as irregularity of shape in the bore of the sleeve (31), at least one enlarged bore section (51) is provided, which forms abutment shoulders for the engagement of a control mandrel (49) projecting into the bore and able to slide along the axis of rotation (25), which mandrel is able to slide by means of a selector fork (43, 45) optionally between axial positions, which correspond to the advanced engaged position and the retracted disengaged position of the sleeve (31).

5. Tool turret according to Claim 3, characterised in that as an irregularity of shape, a control pin (166;266) seated in the wall of the sleeve (131;231) and extending radially inwards in its bore is provided, which control pin engages in a slot (172;272) extending obliquely with a component in the axial direction, which slot is constructed in the wall of a control drum (162;262), which projects into the bore of the sleeve (131;231), is mounted to rotate about the axis of rotation (125;225) and to be axially fixed, and that a braking magnet (170;270) belonging to the control device and acting on the control drum (162,262) is provided, which can be energized optionally for producing a braking action, which exceeds the entrainment action of a frictional connection possibly prevailing between the control drum (162;262) and the sleeve (131;231).

6. Tool turret according to Claim 3, characterised in that the sleeve (231) is biased by an engagement spring (283) for an axial displacement into the advanced engaged position, that a disengagement spring (261) opposing the engagement spring (283) is provided, which keeps the sleeve (231) normally in the retracted disengaged position and that a control member acting on the disengagement spring (261) is provided, which can be actuated optionally by the control device in order to make the disengagement spring inoperative, so that the sleeve can be moved by the engagement spring into the advanced engaged position.

7. Tool turret according to Claim 6, characterised in that provided as the control member is a control pin (266) extending radially in the bore of the sleeve (231) and connected to the sleeve (231) for rotation, which control pin engages in a slot (272) extending obliquely with a component in the axial direction, which slot is constructed in the wall of a control drum (262), which projects into the bore of the sleeve (231), is mounted to rotate about the axis of rotation (225) and is fixed in the axial direction and in the case of the rotary movement of the sleeve (231) is able to rotate therewith, and that a braking magnet (270) belonging to the control device and acting on the control drum (262) is provided, which can be energized optionally for producing a braking action, which exceeds the entrainment action of a frictional connection possibly prevailing between the control drum (262) and sleeve (231).

8. Tool turret according to one of Claims 1 to 7, characterised by at least one additional sliding gear in driving connection with the toothed ring (21; 121; 221), which for the formation of an additional working position for a rotary tool to be driven, is mounted in a position in the turret head offset with respect to the first sliding gear, whereof the position is chosen so that the receiving shaft (12; 112) in a desired tool receptacle (11), can be aligned by a rotary step of the tool disc (5) with the axis of rotation of the additional sliding gear.

**Revendications**

1. Tourelle pour machines-outils, notamment pour tours et pour unités d'usinage à commande numérique, comportant une tête-révolver (1; 101; 201), qui définit un axe (8) et un palier pour un plateau porte-outils (5) tournant autour dudit axe (8), qui peut être avancé d'un certain nombre de pas angulaires correspondant à un certain nombre de logements d'outils (11) distribués le long dudit pourtour, logements dans chacun desquels peut être reçu un porte-outils pourvu d'une tige de réception (12; 112), parmi lesquels ceux prévus pour recevoir des outils tournants comportent respectivement un arbre de transmission (13; 113) monté à rotation s'étendant parallèlement à l'axe (8) de la tourelle, qui peut être mu par un dispositif d'entraînement, présentant une roue coulissante (31; 131; 231) dont l'axe est parallèle à celui de la tourelle (1), et qui peut se déplacer axialement le long de son axe de rotation (25; 125; 225) entre une position d'accouplement avancée par rapport au plateau porte-outils (5), position dans laquelle la roue coulissante (31; 131; 231) et l'arbre de transmission (13; 113) d'un arbre récepteur (12; 112) devant être entraîné en rotation sont accouplés, et une position rétractée de non-accouplement, et un dispositif de commande (41) pour déplacer sélectivement la roue coulissante (31; 131; 213) entre lesdites positions d'accouplement et de non-accouplement, caractérisée en ce que le dispositif d'actionnement comporte une couronne dentée (21; 121; 221), montée à rotation dans la tourelle (1; 101; 201) coaxialement à l'axe (8) de celle-ci, et qui, par l'intermédiaire de sa denture extérieure est en liaison cinématique avec la roue coulissante (31; 131; 231) et en ce que la position de son axe de rotation (25; 125; 225) a été choisie de façon que la roue coulissante (31; 131; 231) et l'arbre de transmission (13; 113) de l'arbre de récepteur devant être entraîné (13; 113) sont coaxiaux et dans la position avancée d'accouplement sont accouplés bout à bout.

2. Tourelle selon la revendication 1, caractérisée en ce que la roue coulissante est logée déplaçable axialement dans le perçage du moyeu d'un pignon (23; 123; 223) monté à rotation et axialement inamovible, engrénant avec la denture de la couronne dentée (21; 121; 221), et présente une denture en coin extérieure (33; 133; 233) qui s'engage dans les rainures en coin (35) du perçage du moyeu du pignon (23;

123; 223) ce qui fait que ce dernier et la roue coulissante sont solidaires en rotation.

3. Tourelle selon la revendication 2, caractérisée en ce que la roue coulissante présente la forme d'un manchon cylindrique circulaire allongé (31; 131; 231) dont une partie, au moins, du pourtour comporte une denture en forme de coin (33; 133; 23) et dont le perçage présente, au moins, une irrégularité structurale ou formelle adaptée à coopérer avec le dispositif de commande.

4. Tourelle selon la revendication 3, caractérisée en ce que l'irrégularité structurale du perçage du manchon (31) se présente sous la forme d'une section agrandie (51) du perçage qui forme des épaulements constituant des butées pour une broche ou une pointe de commande (49), déplaçable le long de l'axe de rotation (25), qui s'engage dans le perçage, et qui, au moyen d'une fourche de commande (43, 45) peut être déplacé entre deux positions axiales correspondant respectivement à la position avancée d'accouplement et la position rétractée de non-accouplement du manchon (31).

5. Tourelle selon la revendication 3, caractérisée en ce que l'irrégularité structurale est une pointe de commande (166, 266) s'étendant vers l'intérieur, plantée dans la paroi du manchon (131; 231) qui s'engage dans une fente oblique ayant une composante axiale (172; 272) formée dans la paroi d'un tambour de commande (162; 262), qui s'avance dans le perçage du manchon (131; 231) et qui est monté à rotation autour de l'axe (125; 225) et axialement fixe par rapport à celui-ci et en ce qu'il est prévu un aimant de freinage (170; 270), appartenant au dispositif de commande, et qui agit sur le tambour de commande (162; 262), qui, peut, sélectivement être excité pour développer une action de freinage qui surpasse l'action d'entraînement d'une éventuelle force de friction s'exerçant entre le tambour de commande (162; 262) et le manchon (131; 231).

6. Tourelle selon la revendication 3, caractérisée en ce que le manchon (231) est sollicité à s'avancer axialement dans la position d'accouplement prévue par un ressort de rappel (283) qui tient le manchon (231) normalement dans sa position rétractée de non-accouplement, et que le manchon peut être déplacé par le ressort dans la position avancée de couplage prévue.

7. Tourelle selon la revendication 6, caractérisée en ce que l'organe commande une pointe (266) s'étendant radialement dans le perçage du manchon (231), qui s'engage dans une fente oblique ayant une composante axiale (272), formée dans la paroi d'un tambour de commande (262), qui s'avance à l'intérieur du perçage du manchon (231), est monté à rotation autour de l'axe (225) et axialement inamovible et qui, quand le manchon (231) tourne avec lui, et en ce qu'un aimant de freinage (270) agissant sur le tambour de commande (252) est prévu et permet, sélectivement de produire une force de freinage qui surpasse l'action d'entraînement due à une éventuelle force de friction s'exerçant entre le tambour de commande (262) et le manchon (231).

8. Tourelle selon l'une quelconque des revendications 1 à 7, caractérisée en ce que dans la tourelle est montée, au moins, une roue coulissante supplémentaire, en liaison cinématique avec la couronne dentée (21; 121; 221) destinée à former une position de travail supplémentaire pour un outil rotatif devant être entraîné, dans une position décalée par rapport à celle de la première roue coulissante montée dans la tourelle (1), et dont la position est choisie de manière que l'arbre (12; 112) d'un logement d'outil donné (11) peut, par un mouvement de rotation du plateau porte-outils (5) être aligné avec l'axe de rotation de la roue coulissante supplémentaire.

FIG.1

EP 0 302 998 B1

FIG. 2

FIG.3

EP 0 302 998 B1

FIG.4